# DEMANDE DE BREVET EUROPEEN

(11) **EP 0 642 866 A1**
(43) Date de publication de la demande: **15.03.1995**
(21) Numéro de dépôt: 94114062.6
(22) Date de dépôt: 08.09.1994
(51) Int. Cl.: B23H 7/26

(54) **Dispositf pour alimenter en courant électrique en élément rotatif et son application en électroérosion**

(30) Priorité: 10.09.1993 CH 2714/93
(71) Demandeur: CHARMILLES TECHNOLOGIES S.A., CH-1217 Meyrin 1 (CH)
(72) Inventeur: Girardin, Roger, CH-1214 Vernier (CH)

(57) **Abrégé**

Un dispositif pour réaliser un bon contact électrique entre une pièce cylindrique en rotation et au moins un conducteur fixe en rotation, comporte
- au moins un guide conducteur monté autour du cylindre rotatif à alimenter de manière à être entraîné en rotation avec lui et à réaliser avec lui un bon contact électrique pratiquement sans frottements,
- au moins un contact fixe en rotation dans lequel sont sertis des organes alimentés par le générateur de courant et destiné à être appliquée contre le guide rotatif de manière à lui transmettre le courant électrique avec un bon rendement, pratiquement sans frottements et sans échauffement, et
- des moyens pour appliquer ce contact fixe contre le guide rotatif, tels un élément faisant ressort et un élément de compression mobile le long du cylindre rotatif à alimenter et destiné à être fixé solidairement à ce dernier.
On peut ainsi alimenter une pièce rotative avec de fortes densités de courant, supérieures à plusieurs centaines d'ampères par cm².

Ce type de contact peut avantageusement être utilisé pour alimenter en courant d'usinage de forte densité, pratiquement sans échauffement, une broche tournante électroconductrice montée sur une tête d'usinage EDM.

## Description

La présente invention concerne un dispositif pour alimenter en courant électrique une pièce métallique cylindrique en rotation à partir d'au moins un conducteur fixe en rotation; plus généralement, elle concerne aussi un dispositif pour effectuer tout type de liaison électrique, telle la tramsmission de signaux, entre une pièce rotative et un conducteur fixe. Des dispositifs de ce genre peuvent être utilisés par exemple en usinage électrique pour alimenter une électrode-outil rotative en impulsions d'électro-érosion; ils peuvent aussi être utilisés dans d'autres domaines pour relier divers capteurs ou thermocouples montés sur la partie rotative d'une turbine ou d'un générateur, par exemple, à des instruments de mesure fixes.

Un tel dispositif doit assurer une transmission fiable et constante des signaux électriques au cours de longues périodes; le rendement, donc le contact électrique, doit être aussi bon que possible; de plus ce contact doit s'opérer avec de faibles frottements, en évitant de préférence tout échauffement. Lorsqu'il est destiné à l'usinage électrique, en particulier au fraisage EDM, le dispositif doit transmettre avec le moins de pertes et d'échauffement possible un courant de très forte intensité (par exemple quelque centaines d'ampères par cm²) à une électrode-outil tournant à très grande vitesse (plusieurs milliers de tours par minute). Les contacts bien connus à balais frotteurs ne sont alors pas satisfaisants, même dans le cas de plusieurs balais radiaux, disposés symétriquement autour de l'axe de rotation de la pièce cylindrique rotative. En effet, il est pratiquement impossible d'ajuster le profil concave de ces balais de manière qu'ils aient le même rayon de courbure que le cylindre rotatif à alimenter; le contact se fait soit par les extrémités (cas où le profil des balais est plus concave que le cylindre) ou par une région centrale (cas où ce profil est moins concave que le cylindre), jamais par toute la surface du balai; la surface de contact est donc faible; il y a apparition de points chauds; comme les balais s'usent sur les bords ou au centre, ils se déforment et s'usent donc rapidement et de manière inégale, quel que soit le soin avec lequel leur surface enserrant la pièce rotative a été profilée. La résistance du contact augmente rapidement, et par suite l'échauffement. De plus, dés que la vitesse de rotation dépasse quelques centaines de tours par minute, les balais ont tendance à "décoller" suite à l'apparition d'un film d'air autour du cylindre.

On connait aussi des contacts au mercure, par exemple ceux décrits dans les brevets FR 1.118.875 et US 3 022 479 : une chambre remplie de mercure est délimitée par une pièce creuse annulaire, conductrice et fixe en rotation, disposée coaxialement au cylindre rotatif; elle comporte à chaque extrémité un agencement faisant office de joint pour emprisonner le mercure et comportant un roulement à billes qui la relie au cylindre rotatif. Le mercure établi un bon contact électrique avec le cylindre rotatif, qui tourne en "baignant" dans ce liquide. Mais étant donnée la grande vitesse de rotation du cylindre, les joints annulaires risquent de s'user, d'où des problèmes de fuites de mercure. Ce type de joint n'est donc pas adapté au but de la présente invention: transmettre un courant de forte intensité à un élément rotatif pouvant être animé d'une grande vitesse de rotation.

Enfin, d'autres solutions proposées dans l'état de la technique, par exemple dans US 2,818,490 ou FR 2.577.156, décrivent des contacts où le courant doit traverser des roulements à billes faisant la liaison entre éléments fixes et éléments rotatifs. Or il est bien connu de l'homme de l'art qu'un roulement à billes n'offre pas un bon contact. Etant données la grande vitesse de rotation et la forte intensité du courant à transmettre, il est prévisible qu'il y aura rapidement de mauvais contacts, donc de forts échauffements et une détérioration accélérée de ces roulements et donc du contact. De plus, il y a apparition de microdécharges à partir d'une certaine vitesse de rotation. Même sans ce problème de mauvais contact, un roulement à billes présente une faible surface de contact, donc un mauvais rendement. Donc ce type de solution n'est pas non plus adapté à la présente invention.
De plus, dans FR 2.577.156, le courant n'est pas amené du conducteur fixe en rotation directement et radialement au cylindre rotatif, comme c'était le cas avec les contacts à balais frotteurs ou au mercure ci-dessus, ou a roulements à billes du US 2,818,490; il transite d'abord du conducteur fixe à des guides annulaires conducteurs et entraînés en rotation avec le cylindre, selon un trajet parallèle à l'axe de rotation du cylindre; puis il passe de ces guides au cylindre.

Le but de la présente invention était de réaliser un bon contact électrique entre un cylindre tournant à très grande vitesse, c'est-à-dire plusieurs milliers de tours/mn, et une pièce conductrice fixe, et de faire passer de cette pièce au cylindre un courant électrique pouvant atteindre plusieurs centaines d'ampères par cm², de manière durable, sans pertes et avec très peu d'échauffement.

Ce but a été réalisé avec le dispositif pour contact électrique de la présente invention, tel que défini aux revendications 1 à 7. Il s'agit d'une pièce conductrice fixe en rotation, en général annulaire, disposée autour du cylindre rotatif à alimenter; elle est creusée d'au moins un logement, ménagé par exemple le long de certains de ses rayons, dans lesquels sont sertis des organes alimentés par le générateur de courant et aptes à amener de fortes densités de courant, telles par exemple des tresses ou cables conducteurs multispires ou multibrins. Elle sera appelée par la suite "contact". Au moins l'une de ses faces est destinée à être appliquée contre l'une des faces d'au moins un guide conducteur rotatif, de manière à réaliser un contact pratiquement sans frottements; celui-ci, en général annulaire et appelé par la suite "plateau", est monté autour du cylindre rotatif à alimenter; il est agencé pour transmettre le courant au cylindre avec un bon contact électrique, pratiquement sans frottement, tandis qu'il est entraîné en rotation avec lui.

Selon certaines des variantes de la présente invention, le contact entre le(s) plateau(x) et la pièce-contact fixe est obtenu grâce à au moins un élément faisant ressort, telle une rondelle élastique ou un ressort annulaire faisant rotule, par exemple. Cet élément permet de comprimer, contre un élément de compression mobile le long du cylindre rotatif et apte à être fixé solidairement à ce dernier, tel un écrou annulaire, par exemple, l'empilement comprenant au moins un plateau, le "contact", l'élément faisant ressort et une butée solidaire du cylindre rotatif. L'élément faisant ressort peut être disposé soit entre l'élément mobile et le plateau ou le contact, soit entre la butée et le plateau ou le contact.
La butée solidaire du cylindre rotatif peut être par exemple un épaulement ou une butée à billes ou un palier lisse en céramique. Elle peut aussi être remplacée par l'un des plateaux, ce dernier étant agencé pour être immobilisé contre le cylindre, par exemple en étant vissé contre lui. Un plateau peut ainsi jouer le rôle de la butée ou celui de l'élément mobile de compression.
Ce contact pratiquement sans frottements est obtenu en comprimant cet empilement juste assez pour établir un bon contact entre "contact" et plateau, mais sans freiner la rotation de ce dernier et donc celle du cylindre rotatif.
Dans de nombreux modes de réalisation de la présente invention, deux plateaux sont enfilés sur le cylindre rotatif de part et d'autre du "contact".
Selon d'autres variantes de la présente invention, ces plateaux se prolongent par une rondelle creuse centrale agencée pour se loger dans l'évidement ménagé au centre du "contact", tout en enserrant le cylindre rotatif. Le contact électrique avec ce cylindre rotatif peut alors être aussi réalisé aussi par ces rondelles; on augmente ainsi la surface de contact. Elles peuvent ne pas se loger dans l'évidement ménagé au centre du "contact": le plateau est enfilé dans l'autre sens sur le cylindre, sa face portant la rondelle n'étant pas celle faisant contact avec le "contact".

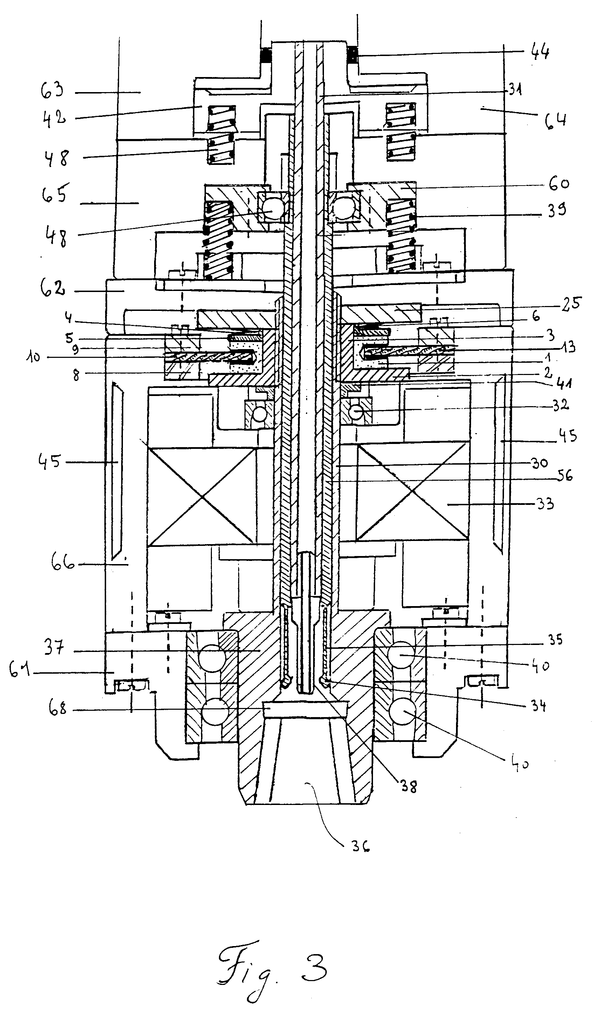

Il peut être aussi avantageux de disposer deux plateaux de part et d'autre du contact en orientant leurs rondelles dans le même sens; ces deux plateaux peuvent présenter une géométrie différente, l'un pouvant par exemple être monté autour de l'autre, comme montré à la figure 3. Une bague isolante, par exemple en céramique, peut être montée dans l'évidement ménagé au centre du "contact"; elle a la hauteur et le diamètre de cet évidement, de manière à isoler le "contact" du cylindre rotatif.
On peut prévoir des organes fixes, en particulier un berceau circulaire coopérant avec une bride, destinés à maintenir les organes d'alimentation amenant le courant depuis la source .

Le contact de la présente invention peut donc présenter une infinité de formes d'exécution. Deux exemples de réalisation seront illustrées schématiquement à l'aide des figures 1 et 2 du dessin annexé, un troisième exemple étant indiqué à la figure 3.

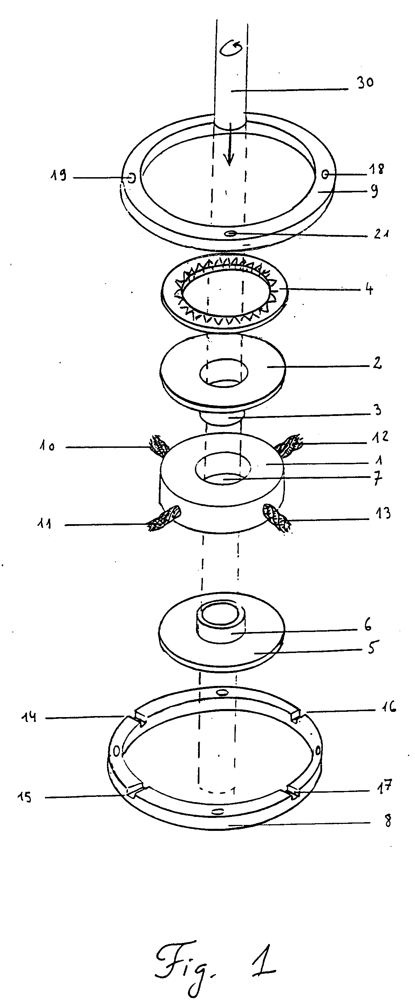

La figure 1 représente un empilement réalisé autour du cylindre rotatif 30 destiné à être alimenté en courant électrique. Il est constitué par le ressort annulaire 4, un premier plateau 2 avec rondelle 3, le contact 1 en forme d'anneau dans lequel sont sertis 4 conducteurs multibrins d'amenée de courant 10 à 13, et un deuxième plateau 5 avec rondelle 6. L'élément mobile de compression et la butée ne sont pas montrée au dessin afin de simplifier ce dernier. Les rondelles 3 et 6 sont agencées pour venir se loger dans l'évidement 7 du contact 1. Les conducteurs multibrins 10 à 13 viennent se loger dans les évidements 14 à 17 du berceau 8. La bride 9 vient se fixer sur le berceau 8 grâce à quatre vis 18 à 21 (vis 20 non représentée), de manière à coopérer avec ce berceau 8 pour maintenir les conducteurs multibrins 10 à 13. Les plateaux 2 et 5 sont entraînés en rotation avec le cylindre 30, tandis que le contact 1, le ressort 4, le berceau 8 ainsi que la bride 9 restent fixes en rotation.

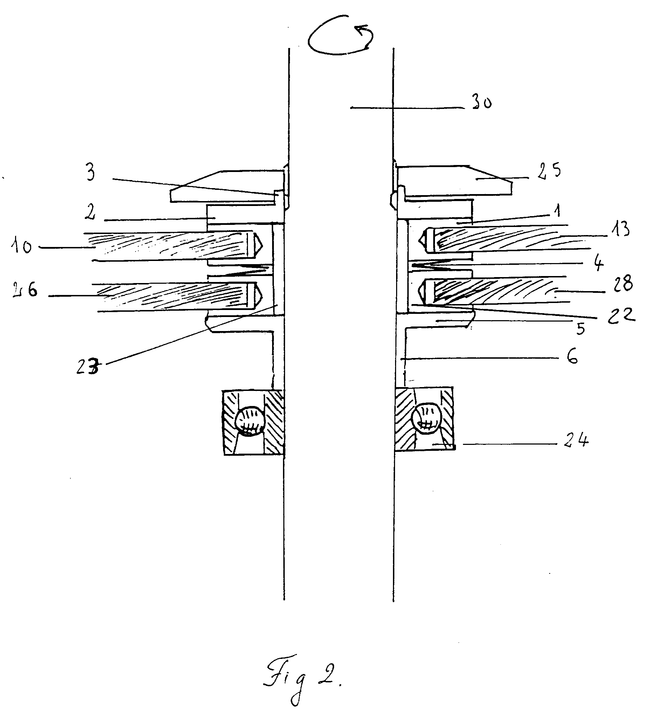

Les éléments des figures 2 et 3 correspondant à des éléments présents sur la figure 1 portent les mêmes numéros de référence sur les trois figures. Cette figure 2 est une coupe axiale d'une variante d'un contact selon la présente invention présentant deux contacts 1 et 22 sertissant respectivement les conducteurs multibrins 10 et 13, 26 et 28. L'élément faisant ressort 4 est monté entre ces deux contacts 1 et 22. Le plateau 2, respectivement 5 se prolonge par la rondelle creuse centrale 3, respectivement 6; ces rondelles 3 et 6 sont disposées à l'opposé des contacts 1 et 22. L'écrou 25, mobile le long du cylindre rotatif 30, maintient la rondelle 3 contre le cylindre 30 et repousse l'empilement constitué par le plateau 2, les contacts 1 et 22 séparés par le ressort 4, ainsi que le plateau 5 prolongé par sa rondelle 6 contre la butée à billes 24. La bague isolante 23 se loge dans les évidements des contacts 1 et 22 en évitant des contacts parasites entre les anneaux 1 et 22. Le courant ne se transmet ainsi que de ces anneaux 1 et 22 aux plateaux 2 et 5, puis de ces derniers au cylindre 30.

Il peut être aussi avantageux d'utiliser une disposition du type de celle illustrée à la figure 3: un premier plateau 2 est muni d'une rondelle 3 qui se prolonge sur toute la hauteur du contact 1 ainsi que celle du deuxième plateau 5 et de sa rondelle 6; le diamètre de cette rondelle 6 est approprié pour enserrer la rondelle 3 du premier plateau 2; le plateau 5 est disposé de l'autre côté du contact 1, de manière à comprimer l'élément ressort 4 contre l'écrou 25. De plus, le plateau 2 est vissé sur le cylindre rotatif 30 et fait ainsi office de butée. Il repose toutefois sur un guide 41, fixe en rotation, monté contre le roulement à billes 32.

Les contacts selon la présente invention permettent donc de transmettre sans grand échauffement un courant de forte densité à un cylindre tournant à grande vitesse. Ils offrent encore beaucoup d'autres avantages, en particulier une grande simplicité de constitution et de réglage : il suffit de réaliser le bon serrage de l'élément ressort appliquant le(s) plateau(x) contre le(s) contact(s). De plus ces contacts se prètent bien à la miniaturisation. Ils permettent de résoudre avec élégance les problèmes posés par les contacts à balais, par exemple en enfonçage ou contournage EDM.

Le progrés qu'ils représentent apparaitra mieux en décrivant l'une de leurs applications particulièrement avantageuse, telle que définie aux revendications 8 à 14: leur utilisation dans une broche tournante pour fraisage EDM, par exemple la broche schématisée à la figure 3. Rappelons que le fraisage EDM consiste à éroder un volume à trois dimensions avec une électrode-outil rotative, de forme simple et indépendante du contour souhaité, en usinant de préférence avec un régime à forte usure. Pour entraîner la tête d'usinage en rotation aux vitesses nécessaires en fraisage (plusieurs milliers de tours par minute), on connait le système décrit dans la demande internationale WO 90/11159. Ce système permet d'injecter assez de liquide à travers le corps de broche et dans le porte-outil pour les refroidir efficacement ainsi que l'outil; un tel refroidissement est nécessaire pour contrebalancer l'important échauffement dû à une alimentation en courant d'usinage de forte densité (une ou plusieurs centaines d'ampères /cm²); ce dispositif connu, qui permettait d'atteindre des rotations de 10.000 tours/minute, comportait un joint annulaire rotatif reliant la broche à une source de liquide sous pression et destiné à éviter une perte d'étanchéïté. Pour augmenter la résistance et la longévité de ce joint entraîné en rotation rapide avec la broche, il fallait utiliser un canal d'arrivée du liquide dans la broche aussi étroit que possible (par exemple, pour une broche de 100 mm de diamètre , le canal a un diamètre de 6 mm) mais suffisant toutefois pour assurer un débit satisfaisant de liquide de refroidissement.

Or, grâce aux contacts de la présente invention, l'alimentation en courant d'usinage de forte densité se fait pratiquement sans échauffement. Il n'est plus nécessaire de prévoir dans le corps de broche une chambre d'injection alimentant tout un réseau de refroidissement communiquant avec des canaux dans le porte-outil. Il suffit d'injecter le liquide d'usinage à travers la broche, de la tête d'usinage au porte-outil et à l'outil.

Signalons que le mode de réalisation illustré à la figure 3 présente deux autres améliorations par rapport à la broche décrite dans la demande internationale WO 90/11159:
- le moteur actionnant la rotation de la broche est intégré au corps de broche, en particulier grâce au gain de place dû à la suppression du réseau de refroidissement suite à l'amenée du courant d'usinage pratiquement sans échauffement. Ce type de montage diminue la complexité et le côut du dispositif et améliore la qualité de la transmission et l'équilibrage de l'ensemble;
- la broche tourne sur elle-même autour d'un cylindre creux et fixe en rotation, qui canalise le liquide d'usinage injecté à travers la broche. On supprime ainsi le problème du joint d'étanchéité entourant une broche tournant à grande vitesse.

Cette figure 3 est une coupe axiale d'un ensemble composé d'une broche tournante montée dans un corps de broche relié par des moyens connus à une fixation (elle aussi de type connu et non-représentée); cette fixation peut être par exemple un organe d'accouplement agencé pour être monté et démonté automatiquement d'un mandrin fixé par des moyens connus à l'élément mobile d'une tête d'usinage EDM, (elle aussi de type connu et non-représentée). Le verrouillage et le déverrouillage de la broche peuvent par exemple être actionnés par application d'une pression hydraulique ou pneumatique.

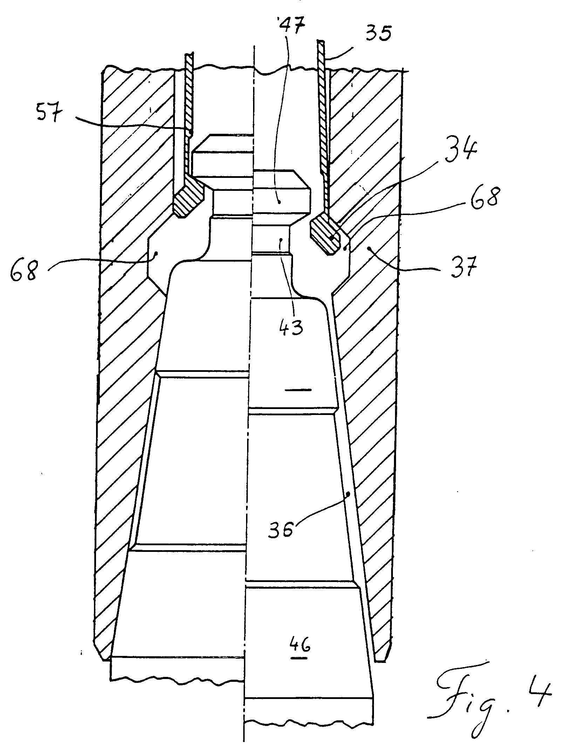

Le manchon de la broche est creux et entoure une chambre cylindrique débouchant sur un évidement conique 36. Il est composé des deux tubes concentriques 56 et 30, entraînés en rotation autour d'un tube central 31 non rotatif, par le moteur 33. Le tube interne 56 joue le rôle d'un piston tirant: sa partie inférieure 35 comporte des fentes verticales, constituant ainsi une pince élastique; cette partie 35 est terminée par un épaulement 34 tirant le porte-outil vers le haut et le maintenant dans l'évidement 36. Pour simplifier le dessin, le porte-outil et les organes ci-dessus sont représentés séparément à la figure 4.
Le tube 56 coulisse le long du tube 31 lorsqu'il est actionné verticalement par le piston 60 commandé pneumatiquement. Le ressort de rappel 39 le repousse ensuite vers le haut, en position de repos. Le tube externe 30, qui se termine par un épaulement 37, n'est pas mobile verticalement et présente un renfoncement 68 (dont la fonction sera expliquée en regard de la figure 4).

Le tube 31 fixe en rotation se prolonge jusqu'à une chambre de distribution pour le liquide d'injection communiquant avec un canal d'amenée arrivant de la tête d'usinage. Le joint d'étanchéité 44 raccordant ce tube 31 à la chambre d'injection n'est plus rotatif, comme dans la broche décrite dans la demande internationale WO 90/11159, mais statique, d'où disparition du risque d'usure.

Contrairement aux broches tournant à grandes vitesses connues, mentionnées ci-dessus, la broche illustrée ici ne comporte aucun réseau à multiples ramifications canalisant un liquide de refroidissement dans son manchon, ni aucun radiateur à grande surface d'échange de température dans le corps de broche. Elle présente simplement les canaux habituels au niveau du moteur 33.

Le corps de broche est constitué par l'interface 63 qui assure en particulier les amenées de courant électrique et de fluide pneumatique ou hydraulique, et les éléments 61, 62 et 64 à 66. A l'extrémité inférieure, la pièce de protection 61, profilée de manière à offrir un encombrement minimum dans la zone d'usinage, est fixée à l'élément 66 et est donc fixe en rotation comme tous les autres éléments du corps de broche.
Ces éléments du corps de broche abritent en particulier le contact électrique selon la présente invention (élément 66), ainsi que d'autres organes; citons par exemple un capteur pour la vitesse de rotation du moteur 33. Les roulements à billes 40 (élément 61), 58 (élément 65) et 32 (élément 66) permettent la rotation de l'ensemble des pièces 56, 30, 2 à 6, 25 et 41 à l'intérieur du corps de broche, actionnée directement par le moteur 33. Celui-ci peut être relié à la commande numérique de la machine et sa vitesse de rotation asservie à la variation de la tension instantanée Uᵢ de chaque étincelle éclatant entre l'électrode-outil et la pièce usinée.

Enfin, le piston 42, solidaire du tube 31, permet de le mouvoir verticalement. Donc, ce tube 31, la canule 38 et le piston 42 solidaires de ce tube 31, ainsi que le piston 60 forment un ensemble d'éléments non rotatifs autour de l'axe de rotation de la broche, mais pouvant se déplacer verticalement.

Signalons que le tube interne 56, est lui aussi mobile verticalement, entraînant le porte-outil (non représenté), tout en étant évidemment rotatif.

Le montage et le démontage du porte-outil peuvent être réalisés automatiquement (voir figures 3 et 4).
Cette figure 4 montre l'extrémité supérieure d'un porte-outil 46 dans deux positions :
- la partie gauche correspond au porte-outil 46 fixé dans la broche,
- la partie droite au porte-outil engagé dans l'évidement 36, mais non encore maintenu par l'extrémité 35 en forme de pince du tube interne 56. Les chiffres de référence utilisés à la figure 3 ont été conservés.

La pièce élastique formant pince 35, terminant comme décrit ci-dessus le tube interne rotatif 56 de la broche, peut être actionnée vers le haut par le ressort 39 (figure 3) qui repousse vers le haut le piston 60 et donc, grâce au roulement à billes 48, le tube 56. Le porte-outil 46 comporte une partie cônique 49 destinée à s'engager dans l'alésage 36. Ce cône 49 se termine par une partie saillante 47 en forme d'épanouissement rectangulaire dont les dimensions, prises dans un plan perpendiculaire à l'axe de symétrie du porte-outil, sont légèrement inférieures au diamètre interne de la pince 35.
Cette dernière présente un épaulement 57, profilé de façon
- à retenir cette partie 47 lorsqu'elle-même est en position resserrée ou haute, c'est-à-dire lorsqu'elle est engagée complètement au-dessus du renfoncement 68 (partie gauche de la figure 4),
- et à la libérer lorsqu'elle est elle-même repoussée vers le bas et s'écarte donc en s'engageant en partie dans le renfoncement 68, c'est-à-dire lorsque le piston 60 est soumis à une poussée.

Il suffit d'injecter un fluide (huile ou air comprimé; dans cet exemple, il s'agit d'une force pneumatique ou hydraulique, mais tout autre moyen connu pourrait être utilisé) sous pression (canal non représenté) pour repousser le piston 60 vers le bas, permettre au tube 56 de descendre et à la pince 35 de s'écarter au niveau du renfoncement 68; on abaisse ensuite le dispositif selon l'axe Z, ce qui permet à la partie saillante 47 du porte-outil 46 de s'engager dans l'évidement 36 et à travers, puis au-dessus du renfoncement 68. Dès qu'on coupe l'injection, le piston 60, ainsi que le tube 56 et donc la pince 35 remontent et celle-ci se resserre autour de la partie rentrante 43 du porte-outil 46, entraînant ainsi ce dernier. Pour déverrouiller le porte-outil 46, on injecte le fluide ce qui fait descendre le tube 56; son extrémité 57 vient pousser sur la partie saillante 47 du porte-outil 5, et sa pince 55 peut s'écarter, en le libérant.

Selon certaines variantes particulièrement avantageuses de cette application de la présente invention, des organes associés au porte-outil peuvent coopérer avec certains éléments de la broche tournante décrite ci-dessus, de manière à monter et démonter automatiquement divers types d'outils. Ainsi, la mobilité verticale du tube intérieur 31 prolongé par la canule 38 peut permettre de saisir ou de libérer l'électrode-outil sans devoir démonter le porte-outil. Il suffit par exemple de prévoir un porte-outil agencé avec un tube de liaison coopérant avec cette canule 38 et avec un tirant dont le mouvement vertical a pour effet de serrer ou déserrer une pince engagée autour de l'électrode. En actionnant le piston 42 solidaire du tube 31 vers le bas (dans cet exemple, il s'agit d'une force pneumatique, mais tout autre moyen connu pourrait être utilisé) la canule 38 pousse le tube de liaison qui de même pousse le tirant. Ce dernier, en comprimant par exemple un ressort coopérant avec une pince, déserre celle-ci, lui permettant de venir s'engager autour de l'électrode ou bien de la libérer. En coupant l'alimentation du piston 42, celui-ci remonte sous l'action du ressort 48, entraînant vers le haut le tube 31 et la canule 38. Le ressort coopérant avec une pince dans le porte-outil repousse vers le haut le tirant et permet à la pince de se resserrer, le cas échéant autour de l'électrode, et de l'entraîner vers le haut.

## Revendications

1. Dispositif pour réaliser un bon contact électrique entre une pièce cylindrique en rotation et au moins un conducteur fixe en rotation, comportant
- au moins un guide conducteur monté autour du cylindre rotatif à alimenter de manière à être entraîné en rotation avec lui et à réaliser avec lui un bon contact électrique pratiquement sans frottements,
- au moins un contact fixe en rotation, creusé d'au moins un logement dans lequel sont sertis des organes alimentés par le générateur de courant et présentant au moins une face destinée à être appliquée contre l'une des faces du guide conducteur de manière à lui transmettre le courant électrique avec un bon rendement, pratiquement sans frottements et sans échauffement, et
- des moyens pour appliquer le contact fixe contre le guide entraîné en rotation avec la pièce à alimenter.

2. Dispositif selon la revendication 1, dans lequel le guide conducteur présente la forme d'un plateau percé d'un trou central agencé pour s'emboiter autour du cylindre rotatif à alimenter, éventuellement prolongé par une bague s'élevant autour de ce trou et agencée elleaussi pour s'emboiter autour du cylindre rotatif.

3. Dispositif selon la revendication 1, dans lequel le contact fixe en rotation est une pièce annulaire creusée selon l'un de ses rayons d'au moins un logement dans lequel est serti un organe approprié au transport de courant électrique depuis un générateur.

4. Dispositif selon la revendication 1, dans lequel l'organe ou les organes d'alimentation en courant électrique sertis dans le contact fixe en rotation sont aptes à transporter de fortes densités de courant, en particulier supérieures à une ou plusieurs centaines d'ampères par cm², telles par exemple des tresses ou cables conducteurs multispires ou multibrins.

5. Dispositif selon la revendication 1, dans lequel les moyens pour appliquer le contact contre le guide comportent
- un élément faisant ressort, telle une rondelle élastique ou un ressort annulaire faisant rotule par exemple, ainsi qu'
- un élément de compression, mobile le long du cylindre rotatif à alimenter et destiné à être fixé solidairement à ce dernier, tel un écrou annulaire par exemple.

6. Dispositif selon la revendication 5, dans lequel l'élément mobile de compression est le guide conducteur.

7. Dispositif selon la revendication 1, dans lequel les moyens pour appliquer le contact contre le guide comportent aussi un élément solidaire du cylindre rotatif à alimenter et destiné à jouer le rôle d'une butée pour l'empilement comprenant le guide conducteur, le contact fixe et l'élément faisant ressort.

8. Dispositif avec broche tournante électroconductrice, destiné à être monté sur une tête d'usinage, en particulier pour enfonçage, contournage ou fraisage EDM, pour fixer et entraîner en rotation à grande vitesse, sans surchauffe, un porte-outil serrant une électrode-outil pour usinage par électroérosion, comportant
- au moins un guide conducteur monté autour de la broche de manière à être entraîné en rotation avec elle et à réaliser avec elle un bon contact électrique pratiquement sans frottements, et
- un contact électrique apte à alimenter la broche et donc l'outil avec un courant d'usinage de forte densité, constitué par un conducteur fixe en rotation, creusé d'au moins un logement dans lequel sont sertis des organes alimentés par le générateur électrique d'électroérosion et présentant au moins une face destinée à être appliquée contre l'une des faces du guide conducteur,
de manière à réaliser cette alimentation avec un bon rendement et pratiquement sans frottements et sans échauffement.

9. Dispositif avec broche selon la revendication 8, dans lequel la broche est entraînée en rotation grâce à un moteur intégré au corps de broche, et réglable de manière à asservir la vitesse de rotation de la broche à la variation d'un paramètre mesurée en cours d'usinage, le courant d'usinage étant amené à cette broche pratiquement sans échauffement.

10. Dispositif avec broche selon la revendication 9, dans lequel la broche est agencée pour tourner à plus 700 tours par minute, de préférence à plus de quelques milliers de tours par minute, sans surchauffe.

11. Dispositif avec broche selon la revendication 8, dans lequel la broche tourne sur elle-même autour d'un cylindre creux qui canalise le liquide d'usinage injecté sous pression à travers la broche, depuis la tête d'usinage ou les éléments de fixation ou d'accouplement jusqu'au porte-outil et à l'outil, l'alimentation en courant d'usinage de forte densité étant réalisée pratiquement sans échauffement et rendant ainsi superflue l'agencement d'un réseau de refroidissement dans la broche et dans le corps de broche.

12. Dispositif avec broche selon la revendication 11, dans lequel le cylindre creux qui canalise le liquide d'usinage est fixe en rotation ainsi que le joint d'étanchéité annulaire monté autour de son extrémité pour relier la broche à la source de liquide sous pression, de façon à pouvoir choisir le diamètre de ce tube sans limitation imposée par l'étanchéité de ce joint et à augmenter la résistance et la longévité de ce joint en évitant qu'il soit entraîné en rotation rapide,

13. Dispositif avec broche selon la revendication 11, dans lequel le cylindre creux qui canalise le liquide d'usinage est agencé pour coulisser à l'intérieur du canal coaxial de la broche de manière à coopèrer avec des organes montés dans le porte-outil pour serrer ou déserrer l'outil sans intervention manuelle .

14. Dispositif avec broche selon la revendication 8, dans lequel la broche présente deux tubes coaxiaux rotatifs,
- le tube externe comportant un alésage destiné à recevoir l'extrémité du porte-outil, et
- le tube interne étant agencé pour coulisser à l'intérieur de ce tube externe de manière à coopèrer avec les moyens d' accrochage du porte-outil en exercant sur ce dernier une force dirigée vers le fond de cet alésage et appropriée pour verrouiller et déverrouiller ce porte-outil sans intervention manuelle .
